(19)

**Europäisches Patentamt**
**European Patent Office**
**Office européen des brevets**

(11) **EP 2 720 295 A1**

(12) **EUROPEAN PATENT APPLICATION**
published in accordance with Art. 153(4) EPC

(43) Date of publication:
**16.04.2014 Bulletin 2014/16**

(21) Application number: **12801225.9**

(22) Date of filing: **12.06.2012**

(51) Int Cl.:
*H01M 2/16* (2006.01)     *C08J 9/26* (2006.01)
*C08J 9/40* (2006.01)     *H01M 10/058* (2010.01)

(86) International application number:
**PCT/JP2012/003831**

(87) International publication number:
**WO 2012/172783 (20.12.2012 Gazette 2012/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.06.2011   JP 2011131566**
**22.05.2012   JP 2012116996**

(71) Applicant: **Nitto Denko Corporation**
**Osaka 567-8680 (JP)**

(72) Inventors:
• **YAMADA, Yosuke**
**Osaka 567-8680 (JP)**

• **KAWAGUCHI, Yoshihide**
**Osaka 567-8680 (JP)**
• **NOUMI, Shunsuke**
**Osaka 567-8680 (JP)**
• **TAKE, Hiroyoshi**
**Osaka 567-8680 (JP)**

(74) Representative: **Hart-Davis, Jason et al**
**Cabinet Beau de Loménie**
**158, rue de l'Université**
**75340 Paris Cedex 07 (FR)**

(54) **PRODUCTION METHOD FOR SEPARATOR FOR NONAQUEOUS ELECTROLYTIC ELECTRICITY STORAGE DEVICE AND PRODUCTION METHOD FOR NONAQUEOUS ELECTROLYTIC ELECTRICITY STORAGE DEVICE**

(57)     Provided is a separator for nonaqueous electrolyte electricity storage devices that includes an improved porous epoxy resin membrane. At least one compound selected from a carboxylic acid, a carboxylic acid salt, a carboxylic acid anhydride, and a carboxylic acid halide, is brought into contact with a porous epoxy resin membrane, and thus hydroxyl groups contained in the porous membrane are reacted with the compound to produce carboxylic acid ester bonds. As a result of this treatment, the amount of active hydroxyl groups present in the porous epoxy resin membrane is reduced, and the porous epoxy resin membrane becomes suitable as a separator for nonaqueous electrolyte electricity storage devices. An epoxy resin sheet yet to be made porous may be subjected to reaction with the compound.

FIG. 2C

**EP 2 720 295 A1**

## Description

TECHNICAL FIELD

The present invention relates to a method for producing a separator for nonaqueous electrolyte electricity storage devices, and a method for producing a nonaqueous electrolyte electricity storage device. The present invention particularly relates to a separator for which an epoxy resin is used.

BACKGROUND ART

The demand for nonaqueous electrolyte electricity storage devices, as typified by lithium-ion secondary batteries, lithium-ion capacitors etc., is increasing year by year against a background of various problems such as global environment conservation and depletion of fossil fuel. Porous polyolefin membranes are conventionally used as separators for nonaqueous electrolyte electricity storage devices. A porous polyolefin membrane can be produced by the method described below.

First, a solvent and a polyolefin resin are mixed and heated to prepare a polyolefin solution. The polyolefin solution is formed into a sheet shape by means of a metal mold such as a T-die, and the resultant product is discharged and cooled to obtain a sheet-shaped formed body. The sheet-shaped formed body is stretched, and the solvent is removed from the formed body. A porous polyolefin membrane is thus obtained. In the step of removing the solvent from the formed body, an organic solvent is used (see Patent Literature 1).

CITATION LIST

Patent Literature

  Patent Literature 1: JP 2001-192487 A
  Patent Literature 2: JP 2000-30683 A

SUMMARY OF INVENTION

Technical Problem

In the above production method, a halogenated organic compound such as dichloromethane is often used as the organic solvent. The use of a halogenated organic compound places a very large load on the environment, and thus has become a problem.

By contrast, with a method described in Patent Literature 2 (a so-called dry method), a porous polyolefin membrane can be produced without use of a solvent that places a large load on the environment. However, this method has a problem in that control of the pore diameter of the porous membrane is difficult. In addition, there is also a problem in that when a porous membrane produced by this method is used as a separator for an electricity storage device, imbalance of ion permeation tends to occur inside the electricity storage device.

A porous epoxy resin membrane can be produced by removing a porogen from an epoxy resin sheet by means of a halogen-free solvent. In addition, parameters such as the porosity and the pore diameter can be controlled relatively easily by adjusting the content and type of the porogen. However, porous epoxy resin membranes have hitherto been considered inferior to porous polyolefin membranes in characteristics required for separators for nonaqueous electrolyte electricity storage devices.

An object of the present invention is to provide a novel method for producing a separator for nonaqueous electrolyte electricity storage devices that includes a porous epoxy resin membrane.

Solution to Problem

That is, the present invention provides a method for producing a separator for nonaqueous electrolyte electricity storage devices that includes a porous epoxy resin membrane, the method including: a porosification step of removing a porogen from an epoxy resin sheet containing a cured epoxy resin composition and the porogen by means of a solvent, and thereby making the epoxy resin sheet porous so as to obtain a porous epoxy resin membrane; and a treatment step of bringing at least one compound selected from a carboxylic acid, a carboxylic acid salt, a carboxylic acid anhydride, and a carboxylic acid halide, into contact with the porous epoxy resin membrane or the epoxy resin sheet, and thereby reacting hydroxyl groups contained in the porous epoxy resin membrane or hydroxyl groups contained in the cured epoxy resin composition with the compound so as to produce carboxylic acid ester bonds.

In another aspect, the present invention provides a method for producing a nonaqueous electrolyte electricity storage device including: an electrode group composed of a layered structure of a cathode, a separator including a porous epoxy resin membrane, and an anode; and an electrolyte having ion conductivity, the method including the steps of: preparing the cathode, the separator, and the anode; and layering the cathode, the separator, and the anode in this order to fabricate the electrode group. The step of preparing the separator includes: a porosification step of removing a porogen from an epoxy resin sheet containing a cured epoxy resin composition and the porogen by means of a solvent, and thereby making the epoxy resin sheet porous so as to obtain a porous epoxy resin membrane; and a treatment step of bringing at least one compound selected from a carboxylic acid, a carboxylic acid salt, a carboxylic acid anhydride, and a carboxylic acid halide, into contact with the porous epoxy resin membrane or the epoxy resin sheet, and thereby reacting hydroxyl groups contained in the porous epoxy resin membrane or hydroxyl groups contained in the cured epoxy resin composition with the compound so as to produce carboxylic acid ester bonds.

Advantageous Effects of Invention

According to the present invention, a separator for nonaqueous electrolyte electricity storage devices that includes a porous epoxy resin membrane can be improved so as to be adapted to enhance the charge/discharge characteristics of nonaqueous electrolyte electricity storage devices.

BRIEF DESCRIPTION OF DRAWINGS

FIG. 1 is a schematic cross-sectional view of a nonaqueous electrolyte electricity storage device according to one embodiment of the present invention.
FIG. 2A is a diagram showing an example of change in the infrared absorption spectrum of a porous epoxy resin membrane which is associated with a treatment with a treatment agent (acetic anhydride).
FIG. 2B is a partially enlarged view of FIG. 2A.
FIG. 2C is a partially enlarged view of FIG. 2A.
FIG. 3 is a diagram showing another example of change in the infrared absorption spectrum of a porous epoxy resin membrane which is associated with a treatment with a treatment agent (acetic anhydride).

DESCRIPTION OF EMBODIMENTS

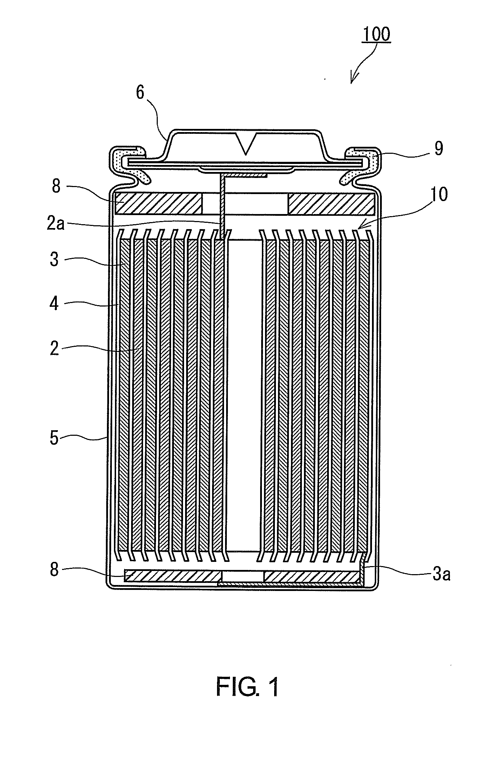

Hereinafter, one embodiment of the present invention will be described with reference to the accompanying drawings. In the following description, ordinary temperature means a temperature in the range of 5°C to 35°C.
As shown in FIG. 1, a nonaqueous electrolyte electricity storage device 100 according to the present embodiment includes a cathode 2, an anode 3, a separator 4, and a casing 5. The separator 4 is disposed between the cathode 2 and the anode 3. The cathode 2, the anode 3, and the separator 4 are wound together, and constitutes an electrode group 10 serving as an electricity generating element. The electrode group 10 is contained in the casing 5 having a bottom. The electricity storage device 100 is typically a lithium-ion secondary battery.
In the present embodiment, the casing 5 has a hollow-cylindrical shape. That is, the electricity storage device 100 has a hollow-cylindrical shape. However, the shape of the electricity storage device 100 is not particularly limited. For example, the electricity storage device 100 may have a flat, rectangular shape. In addition, the electrode group 10 need not have a wound structure. A plate-shaped electrode group may be formed simply by stacking the cathode 2, the separator 4, and the anode 3. The casing 5 is made of a metal such as stainless steel or aluminum. Alternatively, the electrode group 10 may be contained in a casing made of a material having flexibility. The material having flexibility is composed of, for example, an aluminum foil and resin films attached to both surfaces of the aluminum foil.
The electricity storage device 100 further includes a cathode lead 2a, an anode lead 3a, a cover 6, a packing 9, and two insulating plates 8. The cover 6 is fixed at an opening of the casing 5 via the packing 9. The two insulating plates 8 are disposed above and below the electrode group 10, respectively. The cathode lead 2a has one end connected electrically to the cathode 2 and the other end connected electrically to the cover 6. The anode lead 3a has one end connected electrically to the anode 3 and the other end connected electrically to the bottom of the casing 5. The inside of the electricity storage device 100 is filled with a nonaqueous electrolyte (typically, a nonaqueous electrolyte solution) having ion conductivity. The nonaqueous electrolyte is impregnated into the electrode group 10. This makes it possible for ions (typically, lithium ions) to move between the cathode 2 and the anode 3 through the separator 4.
The cathode 2 can be composed of, for example, a cathode active material capable of absorbing and releasing lithium ions, a binder, and a current collector. For example, a cathode active material is mixed with a solution containing a binder to prepare a composite agent, and the composite agent is applied to a cathode current collector and then dried. Thus, the cathode 2 can be fabricated.

As the cathode active material, for example, a commonly-known material used as a cathode active material for a lithium-ion secondary battery can be used. Specifically, a lithium-containing transition metal oxide, a lithium-containing transition metal phosphate, a chalcogen compound, or the like, can be used as the cathode active material. Examples of the lithium-containing transition metal oxide include $LiCoO_2$, $LiMnO_2$, $LiNiO_2$, and substituted compounds thereof in which part of the transition metal is substituted by another metal. Examples of the lithium-containing transition metal phosphate include $LiFePO_4$, and a substituted compound of $LiFePO_4$ in which part of the transition metal (Fe) is substituted by another metal. Examples of the chalcogen compound include titanium disulfide and molybdenum disulfide.

A commonly-known resin can be used as the binder. Examples of resins that can be used as the binder include: fluorine-based resins such as polyvinylidene fluoride (PVDF), hexafluoropropylene, and polytetrafluoroethylene; hydrocarbon-based resins such as styrene-butadiene rubber and ethylene-propylene terpolymer; and mixtures thereof. Conductive powder such as carbon black may be contained in the cathode 2 as a conductive additive.

A metal material excellent in oxidation resistance, such as aluminum processed into the form of foil or mesh, can be suitably used as the cathode current collector.

The anode 3 can be composed of, for example, an anode active material capable of absorbing and releasing lithium ions, a binder, and a current collector. The anode 3 can also be fabricated by the same method as that for the cathode 2. The same binder as used for the cathode 2 can be used for the anode 3.

As the anode active material, for example, a commonly-known material used as an anode active material for a lithium-ion secondary battery can be used. Specifically, a carbon-based active material, an alloy-based active material that can form an alloy with lithium, a lithium-titanium composite oxide (e.g., $Li_4Ti_5O_{12}$), or the like, can be used as the anode active material. Examples of the carbon-based active material include: coke; pitch; baked products of phenolic resins, polyimides and cellulose etc.; artificial graphite; and natural graphite. Examples of the alloy-based active material include aluminum, tin, tin compounds, silicon, and silicon compounds.

For example, a metal material excellent in reduction stability, such as copper or a copper alloy processed into the form of foil or mesh, can be suitably used as the anode current collector. In the case where a high-potential anode active material such as a lithium-titanium composite oxide is used, aluminum processed into the form of foil or mesh can also be used as the anode current collector.

The nonaqueous electrolyte solution typically contains a nonaqueous solvent and an electrolyte. Specifically, for example, an electrolyte solution obtained by dissolving a lithium salt (electrolyte) in a nonaqueous solvent can be suitably used. In addition, a gel electrolyte containing a nonaqueous electrolyte solution, a solid electrolyte obtained by dissolving and decomposing a lithium salt in a polymer such as polyethylene oxide, or the like, can also be used as the nonaqueous electrolyte. Examples of the lithium salt include lithium tetrafluoroborate ($LiBF_4$), lithium hexafluorophosphate ($LiPF_6$), lithium perchlorate ($LiClO_4$), and lithium trifluoromethanesulfonate ($LiCF_3SO_3$). Examples of the nonaqueous solvent include propylene carbonate (PC), ethylene carbonate (EC), methyl ethyl carbonate (MEC), 1,2-dimethoxyethane (DME), $\gamma$-butyrolactone ($\gamma$-BL), and mixtures thereof.

Next, the separator 4 will be described in detail.

In the present embodiment, the separator 4 is formed of a porous epoxy resin membrane having a three-dimensional network structure and pores. Adjacent pores may communicate with each other so that ions can move between the front surface and the back surface of the separator 4, i.e., so that ions can move between the cathode 2 and the anode 3.

The porous epoxy resin membrane for the separator 4 is subjected to a treatment with a treatment agent that is at least one compound selected from a carboxylic acid, a carboxylic acid salt, a carboxylic acid anhydride, and a carboxylic acid halide. In this treatment, the treatment agent is brought into contact with a porous epoxy resin membrane or an epoxy resin sheet yet to be made porous, and is thus reacted with hydroxyl groups contained in the porous epoxy resin membrane or hydroxyl groups contained in a cured epoxy resin composition of the epoxy resin sheet so as to produce carboxylic acid ester bonds (hereinafter, the treatment with the compound may be referred to as "esterification treatment"). When the epoxy resin sheet yet to be made porous is subjected to the esterification treatment, the produced carboxylic acid ester bonds remain in a membrane (porous epoxy resin membrane) obtained as a result of porosification.

The amount of hydroxyl groups (OH group) contained in the porous epoxy resin membrane is reduced by the esterification treatment. The degree of reduction can be assessed by measuring an infrared absorption spectrum (IR spectrum).

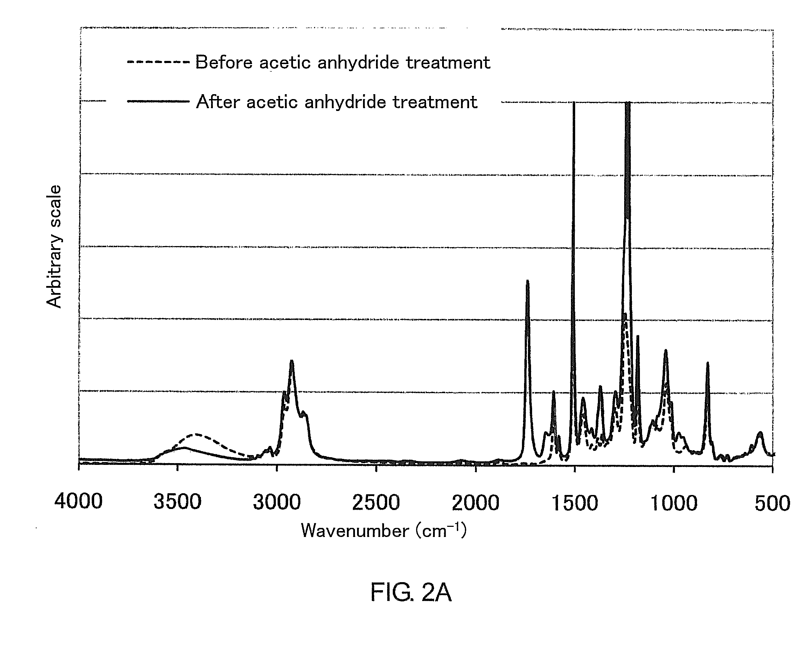

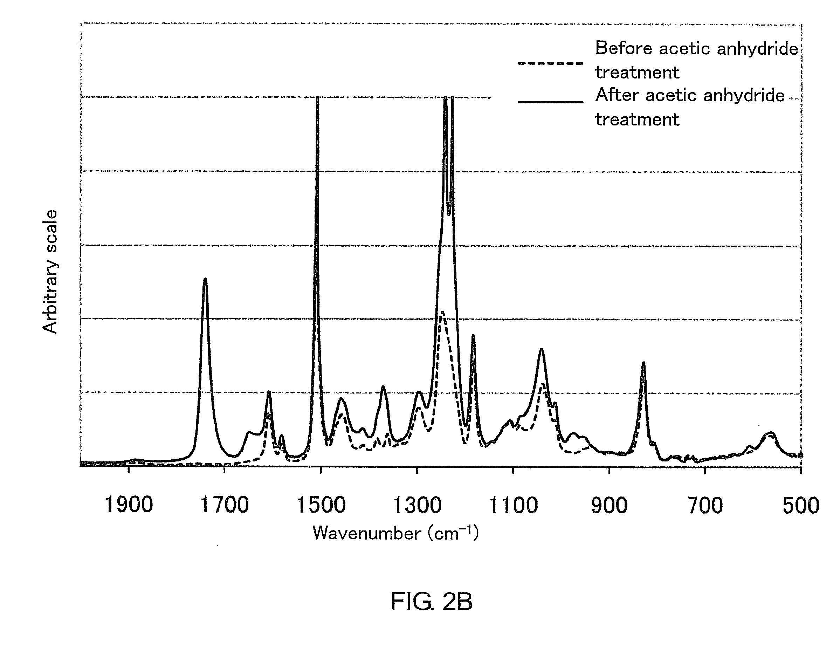

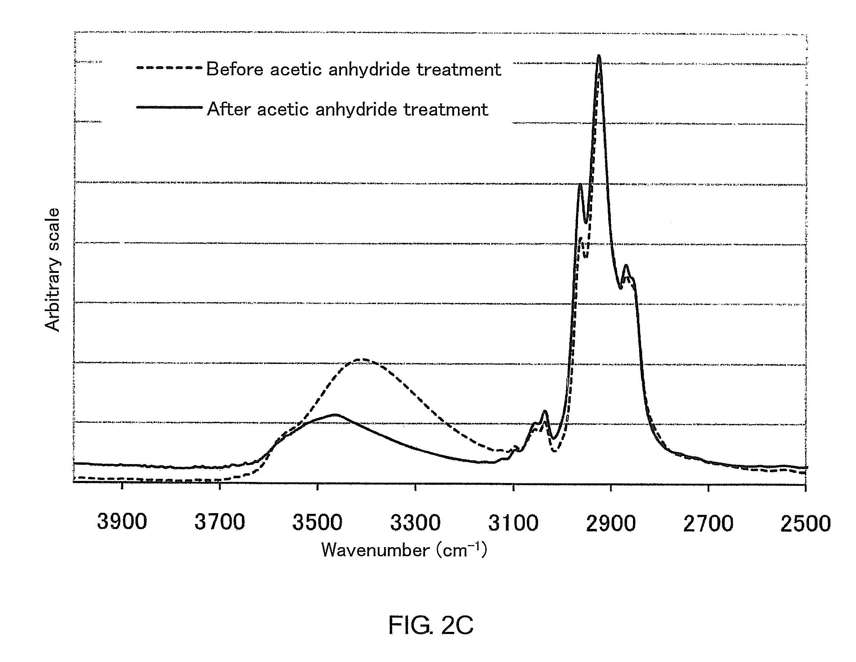

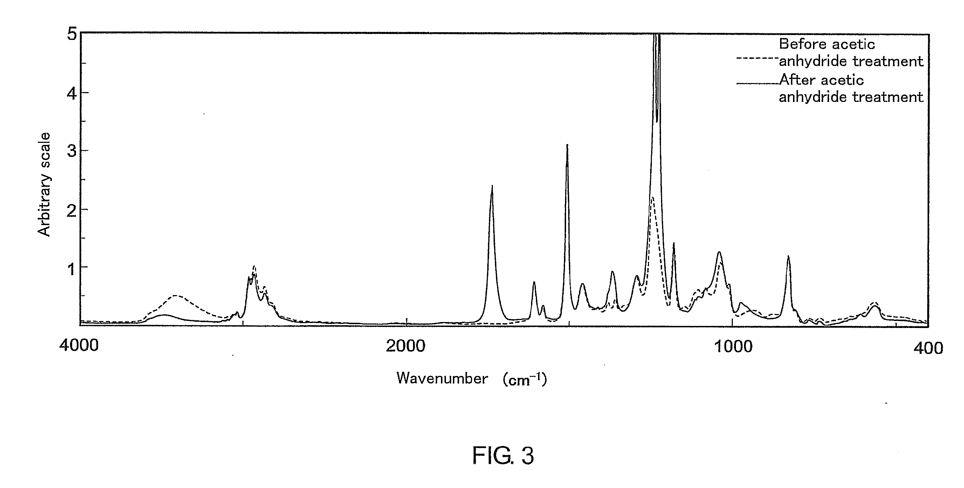

FIG. 2A to FIG. 2C show an example of change in the IR spectrum of a porous epoxy resin membrane. In addition, FIG. 3 shows another example of change in the IR spectrum of a porous epoxy resin membrane. These examples show changes caused by a treatment with acetic anhydride. The spectra before and after the treatment are those obtained for samples fabricated by the same methods as in Comparative Examples and Examples which are described later. In the IR spectra, the absorption peak around 1240 cm$^{-1}$ is derived from absorption by C-O-C bonds, and the absorption peak around 1740 cm$^{-1}$ is derived from absorption by C=O bonds (FIG. 2B). In addition, the absorption peak around 3300 cm$^{-1}$ to 3500 cm$^{-1}$ is derived from absorption by OH bonds (FIG. 2C).

As a result of the esterification treatment, the intensities of the absorption peaks derived from C-O-C bonds and C=O bonds are increased, and the intensity of the absorption peak derived from OH bonds is decreased. This means that alcoholic hydroxyl groups (C-OH) present in the porous epoxy resin membrane react with the treatment agent (acetic anhydride, (CH$_3$COO)$_2$O) to produce carboxylic acid ester bonds (acetic acid ester: C-O-C(=O)-CH$_3$). The carboxylic acid ester bond is represented by a general formula: C-O-C(=O)-R. R is an organic residue derived from the treatment agent (the same applies hereinafter), and the leftmost C in the formula is a carbon atom in the porous epoxy resin membrane.

The amount of hydroxyl groups contained in the porous epoxy resin membrane is reduced by the esterification treatment. Hydroxyl groups that react with the treatment agent are those contained in the porous epoxy resin membrane in a state of being capable of participating in the reaction. Hereinafter, functional groups such as hydroxyl groups that are capable of participating in the reaction may be referred to as, for example, "active hydroxyl groups". In this view, for example, hydroxyl groups buried in the resin and not capable of contacting reactive species are inactive.

In the case where an amine curing agent is used, when curing reaction proceeds sufficiently, the curing agent is incorporated into the molecular chain of the epoxy resin in the form of tertiary amines. However, when curing reaction does not proceed sufficiently, the amine curing agent remains in the porous epoxy resin membrane typically in the form of secondary amines. Similar to active hydroxyl groups, the secondary amines can also form active reaction sites in the porous epoxy resin membrane. However, when the treatment using the treatment agent is carried out as described above, the secondary amines (-NH-) react with the treatment agent to be converted into tertiary amines (-NM-, where M is -C(=O)R), and thus carboxylic acid amide bonds are produced. The carboxylic acid amide bond is represented by a general formula: N-C(=O)-R. The treatment using the treatment agent is basically intended to reduce the amount of active hydroxyl groups. However, in the case of a porous epoxy resin membrane in which a significant amount of secondary amines exist due to insufficient curing reaction of the epoxy resin, the treatment can be used also to reduce the amount of secondary amines (active secondary amines) capable of participating in reactions.

As a result of experiments, it has been found that when a porous epoxy resin membrane in which the amount of active functional groups such as active hydroxyl groups has been reduced by the treatment using the treatment agent is used as a separator for a nonaqueous electrolyte electricity storage device, the characteristics of the nonaqueous electrolyte electricity storage device are better than when a porous epoxy resin membrane not subjected to the treatment is used as the separator.

Even when all of the curing agent is converted into tertiary amines, hydroxyl groups produced by ring opening of epoxy groups may remain in the porous epoxy resin membrane. Therefore, the treatment with the treatment agent generally results in the production of at least carboxylic acid ester bonds. In the case of a porous epoxy resin membrane in which active secondary amines remain, the treatment results in the production of not only carboxylic acid ester bonds but also carboxylic acid amide bonds.

The C-N bond contained in the above carboxylic acid amide bond exhibits absorption at around 1240 cm$^{-1}$. Therefore, the increase in the intensity of the absorption peak present at 1240 cm$^{-1}$, which is basically associated with the production of C-O-C bonds, reflects also the production of carboxylic acid amide bonds in the case of a porous epoxy resin membrane in which a significant amount of secondary amines exist due to insufficient curing reaction of the epoxy resin. The foregoing description gives a typical example where active amines remaining in the curing agent incorporated in the epoxy resin are secondary amines. However, in some cases, primary amines remain in the curing agent incorporated in the membrane. To be more precise, therefore, the carboxylic acid amide bonds are produced by reaction of the treatment agent with active primary amines or active secondary amines remaining in the membrane.

As is apparent from their production process, the carboxylic acid ester bonds produced by contact with the treatment agent constitute chains (-O-C(=O)-R) branched from the main chain of the epoxy resin, and are constituted by carbon atoms in the main chain of the epoxy resin and by chains branched from the carbon atoms. In addition, the carboxylic acid amide bonds produced by contact with the treatment agent constitute chains (-C(=O)-R) branched from the main chain of the epoxy resin, and are constituted by nitrogen atoms in the main chain of the epoxy resin and by chains branched from the nitrogen atoms.

Preferable treatment agents are listed below. Examples of the carboxylic acid include: aliphatic monocarboxylic acids such as formic acid, acetic acid, propionic acid, butyric acid, valeric acid, and caproic acid; aromatic monocarboxylic acids such as benzoic acid, toluic acid, and tolylacetic acid; and aliphatic or aromatic dicarboxylic acids such as oxalic acid, malonic acid, succinic acid, glutaric acid, fumaric acid, maleic acid, and phthalic acid. Examples of the carboxylic acid salt include alkali metal salts, alkaline-earth metal salts, and transition metal salts of the carboxylic acids mentioned above as examples. Examples of the carboxylic acid anhydride include anhydrides of the carboxylic acids mentioned above as examples, such as acetic anhydride and phthalic anhydride. Examples of the carboxylic acid halide include halides of the carboxylic acids mentioned above as examples, and specific examples include fluorides, chlorides, bromides, and iodides, of the carboxylic acids.

The separator 4 has a thickness in the range of, for example, 5 $\mu$m to 50 $\mu$m. When the separator 4 is too thick, it becomes difficult for ions to move between the cathode 2 and the anode 3. Although it is possible to produce the separator 4 having a thickness less than 5 $\mu$m, the thickness is preferably 5 $\mu$m or more, and particularly preferably 10 $\mu$m or more, in order to ensure reliability of the electricity storage device 100.

For example, the separator 4 has a porosity in the range of 20% to 80%, and an average pore diameter in the range of 0.02 $\mu$m to 1 $\mu$m. When the porosity and average pore diameter are adjusted in such ranges, the separator 4 can fulfill a required function sufficiently.

The porosity can be measured by the following method. First, an object to be measured is cut into predetermined dimensions (e.g., a circle having a diameter of 6 cm), and its volume and weight are determined. The obtained results are substituted into the following expression to calculate the porosity.

$$\text{Porosity } (\%) = 100 \times (V - (W/D))/V$$

V: Volume (cm$^3$)
W: Weight (g)
D: Average density of components (g/cm$^3$)

The average pore diameter can be determined by observing a cross-section of the separator 4 with a scanning electron microscope. Specifically, pore diameters are determined through image processing of each of the pores present within a visual-field width of 60 $\mu$m and within a predetermined depth from the surface (e.g., 1/5 to 1/100 of the thickness of the separator 4), and the average value of the pore diameters can be determined as the average pore diameter. The image processing can be performed by means of, for example, a free software "Image J" or "Photoshop" manufactured by Adobe Systems Incorporated.

In addition, the separator 4 may have an air permeability (Gurley value) in the range of, for example, 1 second/100 cm$^3$ to 1000 seconds/100 cm$^3$, in particular, 10 seconds/100 cm$^3$ to 1000 seconds/100 cm$^3$. When the separator 4 has an air permeability within such a range, ions can easily move between the cathode 2 and the anode 3. The air permeability can be measured according to the method specified in Japanese Industrial Standards (JIS) P 8117.

For example, the porous epoxy resin membrane can be produced by any of the following methods (a), (b), and (c). The methods (a) and (b) are the same in that an epoxy resin composition is formed into a sheet shape, and then a curing step is carried out. The method (c) is characterized in that a block-shaped cured product of an epoxy resin is made, and the cured product is formed into a sheet shape.

Method (a)

An epoxy resin composition containing an epoxy resin, a curing agent, and a porogen is applied onto a substrate so that a sheet-shaped formed body of the epoxy resin composition is obtained. Thereafter, the sheet-shaped formed body of the epoxy resin composition is heated to cause the epoxy resin to be three-dimensionally cross-linked. At this time, a bicontinuous structure is formed as a result of phase separation between the cross-linked epoxy resin and the porogen. Thereafter, the obtained epoxy resin sheet is washed to remove the porogen, and is then dried to obtain a porous epoxy resin membrane having a three-dimensional network structure and pores communicating with each other. The type of the substrate is not particularly limited. A plastic substrate, a glass substrate, a metal plate, or the like, can be used as the substrate.

Method (b)

An epoxy resin composition containing an epoxy resin, a curing agent, and a porogen is applied onto a substrate. Thereafter, another substrate is placed onto the applied epoxy resin composition to fabricate a sandwich structure. Spacers (e.g., double-faced tapes) may be provided at four corners of the substrate in order to keep a certain space between the substrates. Next, the sandwich structure is heated to cause the epoxy resin to be three-dimensionally cross-linked. At this time, a bicontinuous structure is formed as a result of phase separation between the cross-linked epoxy resin and the porogen. Thereafter, the obtained epoxy resin sheet is taken out, washed to remove the porogen, and then dried to obtain a porous epoxy resin membrane having a three-dimensional network structure and pores communicating with each other. The type of the substrates is not particularly limited. Plastic substrates, glass substrates, metal plates, or the like, can be used as the substrates. In particular, glass substrates can be suitably used.

Method (c)

An epoxy resin composition containing an epoxy resin, a curing agent, and a porogen is filled into a metal mold having a predetermined shape. Thereafter, the epoxy resin is caused to be three-dimensionally cross-linked to fabricate a hollow-cylindrical or solid-cylindrical cured product of the epoxy resin composition. At this time, a bicontinuous structure is formed as a result of phase separation between the cross-linked epoxy resin and the porogen. Thereafter, the surface portion of the cured product of the epoxy resin composition is cut at a predetermined thickness while rotating the cured product about the hollow cylinder axis or solid cylinder axis, to fabricate a long epoxy resin sheet. Then, the epoxy resin sheet is washed to remove the porogen contained in the sheet, and is then dried to obtain a porous epoxy resin membrane having a three-dimensional network structure and pores communicating with each other.

Hereinafter, the production method of the porous epoxy resin membrane will be described in more detail, taking the method (c) as an example. The step of preparing an epoxy resin composition, the step of curing an epoxy resin, the step of removing a porogen, and the like, are common to all of the methods. In addition, usable materials are also common to all of the methods.

With the method (c), a porous epoxy resin membrane can be produced through the following main steps.

(i) Preparing an epoxy resin composition.
(ii) Forming a cured product of the epoxy resin composition into a sheet shape.
(iii) Removing a porogen from the epoxy resin sheet.

First, an epoxy resin composition containing an epoxy resin, a curing agent, and a porogen (pore-forming agent) is prepared. Specifically, a homogeneous solution is prepared by dissolving an epoxy resin and a curing agent in a porogen.

As the epoxy resin, either an aromatic epoxy resin or a non-aromatic epoxy resin can be used. Examples of the aromatic epoxy resin include polyphenyl-based epoxy resins, epoxy resins containing a fluorene ring, epoxy resins containing triglycidyl isocyanurate, and epoxy resins containing a heteroaromatic ring (e.g., a triazine ring). Examples of polyphenyl-based epoxy resins include bisphenol A-type epoxy resins, brominated bisphenol A-type epoxy resins, bisphenol F-type epoxy resins, bisphenol AD-type epoxy resins, stilbene-type epoxy resins, biphenyl-type epoxy resins, bisphenol A novolac-type epoxy resins, cresol novolac-type epoxy resins, diaminodiphenylmethane-type epoxy resins, and tetrakis(hydroxyphenyl)ethane-based epoxy resins. Examples of non-aromatic epoxy resins include aliphatic glycidyl ether-type epoxy resins, aliphatic glycidyl ester-type epoxy resins, cycloaliphatic glycidyl ether-type epoxy resins, cycloaliphatic glycidyl amine-type epoxy resins, and cycloaliphatic glycidyl ester-type epoxy resins. These may be used singly, or two or more thereof may be used in combination.

Among these, at least one selected from the group consisting of bisphenol A-type epoxy resins, brominated bisphenol A-type epoxy resins, bisphenol F-type epoxy resins, bisphenol AD-type epoxy resins, epoxy resins containing a fluorene ring, epoxy resins containing triglycidyl isocyanurate, cycloaliphatic glycidyl ether-type epoxy resins, cycloaliphatic glycidyl amine-type epoxy resins, and cycloaliphatic glycidyl ester-type epoxy resins, is suitably used. Among these, those having an epoxy equivalent of 6000 or less and a melting point of 170°C or lower can be suitably used. The use of these epoxy resins allows a uniform three-dimensional network structure and uniform pores to be formed, and also allows excellent chemical resistance and high strength to be imparted to the porous epoxy resin membrane.

At least one selected from the group consisting of bisphenol A-type epoxy resins, cycloaliphatic glycidyl ether-type epoxy resins, and cycloaliphatic glycidyl amine-type epoxy resins, is particularly preferable as an epoxy resin used for a separator for a nonaqueous electrolyte electricity storage device.

As the curing agent, either an aromatic curing agent or a non-aromatic curing agent can be used. Examples of the aromatic curing agent include aromatic amines (e.g., meta-phenylenediamine, diaminodiphenylmethane, diaminodiphenyl sulfone, benzyldimethylamine, and dimethylaminomethylbenzene), aromatic acid anhydrides (e.g., phthalic anhydride, trimellitic anhydride, and pyromellitic anhydride), phenolic resins, phenolic novolac resins, and amines containing a heteroaromatic ring (e.g., amines containing a triazine ring). Examples of the non-aromatic curing agent include aliphatic amines (e.g., ethylenediamine, diethylenetriamine, triethylenetetramine, tetraethylenepentamine, iminobispropylamine, bis(hexamethylene)triamine, 1,3,6-trisaminomethylhexane, polymethylenediamine, trimethylhexamethylenediamine, and polyetherdiamine), cycloaliphatic amines (e.g., isophoronediamine, menthanediamine, N-aminoethylpiperazine, an adduct of 3,9-bis(3-aminopropyl)2,4,8,10-tetraoxaspiro(5, 5)undecane, bis(4-amino-3-methylcyclohexyl)methane, bis(4-aminocyclohexyl)methane, and modified products thereof), and aliphatic polyamidoamines containing polyamines and dimer acids. These may be used singly, or two or more thereof may be used in combination.

Among these, a curing agent having two or more primary amines per molecule can be suitably used. Specifically, at least one selected from the group consisting of meta-phenylenediamine, diaminodiphenylmethane, diaminodiphenyl sulfone, polymethylenediamine, bis(4-amino-3-methylcyclohexyl)methane, and bis(4-aminocyclohexyl)methane, can be suitably used. The use of these curing agents allows a uniform three-dimensional network structure and uniform pores to be formed, and also allows high strength and appropriate elasticity to be imparted to the porous epoxy resin membrane.

A preferred combination of an epoxy resin and a curing agent is a combination of an aromatic epoxy resin and an aliphatic amine curing agent, a combination of an aromatic epoxy resin and a cycloaliphatic amine curing agent, or a combination of a cycloaliphatic epoxy resin and an aromatic amine curing agent. These combinations allow excellent heat resistance to be imparted to the porous epoxy resin membrane.

The porogen can be a solvent capable of dissolving the epoxy resin and the curing agent. The porogen is used also as a solvent that can cause reaction-induced phase separation after the epoxy resin and the curing agent are polymerized. Specific examples of substances that can be used as the porogen include cellosolves such as methyl cellosolve and ethyl cellosolve, esters such as ethylene glycol monomethyl ether acetate and propylene glycol monomethyl ether acetate, glycols such as polyethylene glycol and polypropylene glycol, and ethers such as polyoxyethylene monomethyl ether and polyoxyethylene dimethyl ether. These may be used singly, or two or more thereof may be used in combination.

Among these, at least one selected from the group consisting of methyl cellosolve, ethyl cellosolve, polyethylene glycol having a molecular weight of 600 or less, ethylene glycol monomethyl ether acetate, propylene glycol monomethyl ether acetate, polypropylene glycol, polyoxyethylene monomethyl ether, and polyoxyethylene dimethyl ether, can be suitably used. In particular, at least one selected from the group consisting of polyethylene glycol having a molecular weight of 200 or less, polypropylene glycol having a molecular weight of 500 or less, polyoxyethylene monomethyl ether, and propylene glycol monomethyl ether acetate, can be suitably used. The use of these porogens allows a uniform three-dimensional network structure and uniform pores to be formed. These may be used singly, or two or more thereof may be used in combination.

In addition, a solvent in which a reaction product of the epoxy resin and the curing agent is soluble can be used as the porogen even if the epoxy resin or the curing agent is individually insoluble or poorly-soluble in the solvent at ordinary temperature. Examples of such a porogen include a brominated bisphenolA-type epoxy resin ("Epicoat 5058" manufactured by Japan Epoxy Resin Co., Ltd).

The porosity, the average pore diameter, and the pore diameter distribution of the porous epoxy resin membrane vary depending on the types of the materials, the blending ratio of the materials, and reaction conditions (e.g., heating temperature and heating time at reaction-induced phase separation). Therefore, in order to obtain the intended porosity, average pore diameter, and pore diameter distribution, optimal conditions are preferably selected. In addition, by controlling the molecular weight of the cross-linked epoxy resin, the molecular weight distribution, the viscosity of the solution, the cross-linking reaction rate etc. at the time of phase separation, a bicontinuous structure of the cross-linked epoxy resin and the porogen can be fixed in a particular state, and thus a stable porous structure can be obtained.

For example, the blending ratio of the curing agent to the epoxy resin is such that the curing agent equivalent is 0.6 to 1.5 per one epoxy equivalent. An appropriate curing agent equivalent contributes to improvement in the characteristics of the porous epoxy resin membrane, such as the heat resistance, the chemical durability, and the mechanical properties.

In order to obtain an intended porous structure, a curing accelerator may be added to the solution in addition to the curing agent. Examples of the curing accelerator include tertiary amines such as triethylamine and tributylamine, and imidazoles such as 2-phenol-4-methylimidazole, 2-ethyl-4-methylimidazole, and 2-phenol-4,5-dihydroxyimidazole.

In general, 40% by weight to 80% by weight of the porogen can be used relative to the total weight of the epoxy resin, the curing agent, and the porogen. The use of an appropriate amount of the porogen allows formation of a porous epoxy resin membrane having a desired porosity, average pore diameter, and air permeability.

One example of the method for adjusting the average pore diameter of the porous epoxy resin membrane within a desired range is to mix and use two or more types of epoxy resins having different epoxy equivalents. At this time, the difference between the epoxy equivalents is preferably 100 or more. In some cases, an epoxy resin that is liquid at ordinary temperature and an epoxy resin that is solid at ordinary temperature are mixed and used.

Next, a cured product of the epoxy resin composition is fabricated from the solution containing the epoxy resin, the curing agent, and the porogen. Specifically, the solution is filled into a metal mold, and heated as necessary. A cured product having a predetermined shape can be obtained by causing the epoxy resin to be three-dimensionally cross-linked. At this time, a bicontinuous structure is formed as a result of phase separation between the cross-linked epoxy resin and the porogen.

The shape of the cured product is not particularly limited. If a solid-cylindrical or hollow-cylindrical metal mold is used, a cured product having a hollow-cylindrical or solid-cylindrical shape can be obtained. When the cured product has a hollow-cylindrical or solid-cylindrical shape, the cutting step is easy to carry out.

The dimensions of the cured product are not particularly limited. In the case where the cured product has a hollow-cylindrical or solid-cylindrical shape, the diameter of the cured product is, for example, 20 cm or more, and preferably 30 cm to 150 cm, from the standpoint of the production efficiency of the porous epoxy resin membrane. The length (in the axial direction) of the cured product can also be set as appropriate in consideration of the dimensions of the porous epoxy resin membrane to be obtained. The length of the cured product is, for example, 20 cm to 200 cm.

From the standpoint of handleability, the length is preferably 20 cm to 150 cm, and more preferably 20 cm to 120 cm.

Next, the cured product is formed into a sheet shape. The cured product having a hollow-cylindrical or solid-cylindrical shape can be formed into a sheet shape by the following method. Specifically, the cured product is mounted on a shaft, and a surface portion of the circumference of the cured product is cut (sliced) at a predetermined thickness by means of a cutting blade (slicer) so that a long epoxy resin sheet is obtained. More specifically, the surface portion of the cured product is skived while the cured product is being rotated about a hollow cylinder axis (or solid cylinder axis) O of the cured product relative to the cutting blade. With this method, the epoxy resin sheet can be efficiently fabricated.

The line speed during cutting of the cured product is in the range of, for example, 2 m/min to 70 m/min. The thickness of the epoxy resin sheet is determined depending on the intended thickness (5 μm to 50 μm, particularly 10 μm to 50 μm) of the porous epoxy resin membrane. Removal of the porogen and the subsequent drying slightly reduce the thickness. Therefore, the epoxy resin sheet generally has a thickness slightly greater than the intended thickness of the porous epoxy resin membrane. The length of the epoxy resin sheet is not particularly limited. From the standpoint of the production efficiency of the epoxy resin sheet, the length is, for example, 100 m or more, and preferably 1000 m or more.

Furthermore, the porogen is extracted and removed from the epoxy resin sheet (porosification step). Specifically, the porogen is preferably removed from the epoxy resin sheet by immersing the epoxy resin sheet in a halogen-free solvent. Thus, the porous epoxy resin membrane is obtained.

As the halogen-free solvent for removing the porogen from the epoxy resin sheet, at least one selected from the group consisting of water, DMF (N,N-dimethylformamide), DMSO (dimethylsulfoxide), and THF (tetrahydrofuran), can be used depending on the type of the porogen. In addition, a supercritical fluid of water, carbon dioxide, or the like, can also be used as the solvent for removing the porogen. In order to actively remove the porogen from the epoxy resin sheet, ultrasonic washing may be performed, or the solvent may be heated and then used.

The type of a washing device for removing the porogen is not particularly limited either, and a commonly-known washing device can be used. In the case where the porogen is removed by immersing the epoxy resin sheet in the solvent, a multi-stage washer having a plurality of washing tanks can be suitably used. The number of stages of washing is more preferably three or more. In addition, washing that substantially corresponds to multi-stage washing may be performed by means of counterflow. Furthermore, the temperature of the solvent or the type of the solvent may be changed for each stage of washing.

After removal of the porogen, the porous epoxy resin membrane is subjected to drying treatment. The conditions for drying are not particularly limited. The temperature is generally about 40°C to 120°C, and preferably about 50°C to 100°C. The drying time is about 10 seconds to 5 minutes. For the drying treatment, a dryer can be used that employs a commonly-known sheet drying method, such as a tenter method, a floating method, a roll method, or a belt method. A plurality of drying methods may be combined. In the case where treatment of active functional groups is subsequently performed, the drying step may be omitted.

In the treatment step of producing carboxylic acid ester bonds, at least one compound selected from a carboxylic acid, a carboxylic acid salt, a carboxylic acid anhydride, and a carboxylic acid halide, is used as the treatment agent. The treatment step may be carried out either before or after the porosification step of removing the porogen. The treatment step may be carried out in combination with the porosification step. That is, the relation between the treatment step and the porosification step is as described in the following 1) to 3).

1) The treatment step may be carried out before the porosification step. In this case, an epoxy resin sheet that is yet to be made porous and that contains a cured epoxy resin composition and a porogen is subjected to the treatment. Hydroxyl groups contained in the cured epoxy resin composition react with the above-described compound to produce carboxylic acid ester bonds.

2) The treatment step may be carried out after the porosification step. In this case, the porous epoxy resin membrane is subjected to the treatment. Hydroxyl groups contained in the porous epoxy resin membrane react with the above-described compound to produce carboxylic acid ester bonds.

3) The treatment step may be carried out in combination with the porosification step. In this case, in a combined step in which the two steps are carried out together, a treatment liquid containing the above-described compound and a solvent for removing the porogen is used, and carboxylic acid ester bonds are produced while the porogen is removed from the epoxy resin sheet. In other words, the following processes proceed simultaneously: porosification by removal of the porogen from the epoxy resin sheet; and production of carboxylic acid ester bonds on the surface formed by the porosification.

According to the confirmation provided by experiments, the amounts of active hydroxyl groups etc. contained in the porous epoxy resin membrane are reduced by any of 1) to 3) described above.

The treatment of active functional groups can be carried out by bringing the porous epoxy resin membrane or the epoxy resin sheet yet to be made porous into contact with a treatment liquid containing a treatment agent. Specifically, the treatment can be carried out by: (a) immersing the porous epoxy resin membrane or the epoxy resin sheet in the treatment liquid; or (b) applying or spraying the treatment liquid onto the porous epoxy resin membrane or the epoxy resin sheet. An aqueous solution is suitable as the treatment liquid. However, the treatment liquid is not limited to an aqueous solution. Toluene, ethyl acetate, N,N-dimethylformamide (DMF), acetonitrile, ethanol, isopropanol, a mixed solvent thereof, or the like, may be used as the solvent of the treatment liquid, depending on the type of the treatment agent. In addition, when the treatment agent is liquid at the treatment temperature, the liquid can be used as the treatment liquid as it is. That is, a treatment agent in liquid form or a solution containing a treatment agent can be used as the treatment liquid.

In the case of treating functional groups by application or spraying of the treatment liquid, since evaporation of the treatment liquid need not be taken into account, adjustment of the concentration of the treatment liquid is unnecessary, and the necessary amount of the treatment liquid is easy to estimate. In addition, the temperature of the treatment liquid can easily be controlled by adjusting the temperature of a discharge port. For these and other reasons, treatment by application or spraying of the treatment liquid is suitable for mass production.

The treatment of active functional groups can be carried out also by (c) bringing a vapor generated from the treatment liquid into contact with the porous epoxy resin membrane. For example, the porous epoxy resin membrane having been wound, that is, a wound body of the porous epoxy resin membrane, is left in contact with an atmosphere containing a vapor generated from the treatment liquid. Thus, functional groups can be treated. This treatment can be carried out, for example, by feeding a vapor generated from the treatment liquid into a container or a treatment chamber inside which the wound body of the porous epoxy resin membrane is allowed to stand still.

It is sufficient that the treatment liquid of ordinary temperature be brought into contact with the porous epoxy resin membrane or the epoxy resin sheet. However, the treatment liquid may be heated to a temperature higher than ordinary temperature as necessary. In this case, the heating temperature is, for example, higher than ordinary temperature and equal to or lower than 80°C, and particularly higher than ordinary temperature and equal to or lower than 70°C. In addition, the treatment time may be set so that the treatment agent sufficiently pervades the surface of the porous epoxy resin membrane or the like. For example, in the case of treatment by immersion in or application of the treatment liquid, the appropriate treatment time at ordinary temperature is 10 seconds to 30 minutes, and the appropriate treatment time at temperatures higher than ordinary temperature is 1 second to 5 minutes.

It is advantageous that the porous epoxy resin membrane be heated as necessary after contact with the treatment liquid. The heating conditions may be set as appropriate so that, for example, esterification of hydroxyl groups proceeds sufficiently. In one example, the appropriate conditions are such that the heating temperature is in the range of ordinary temperature to 80°C, and is particularly in the range of ordinary temperature to 70°C, and the heating time is 1 second to 60 minutes, and 5 minutes to 60 minutes in some cases. In addition, the porous epoxy resin membrane may be dried to remove an excess of the solution in advance of heating. Generally, it is sufficient that this drying be performed by air drying at ordinary temperature.

After the heating, the porous epoxy resin membrane is washed to remove a compound remaining in the membrane, such as a carboxylic acid, and is then subjected to drying treatment. Water is suitable as a solvent for washing. However, methanol, ethanol, isopropanol, N,N-dimethylformamide (DMF), acetonitrile, a mixed solvent thereof, a mixed solvent thereof with water, or the like, may be used. The apparatus and temperature applied to the washing and drying can be the apparatus and temperature described above for washing for removing the porogen and drying.

According to 1) described above, in the porosification step of removing the porogen, the above-described compound used as the treatment agent can also be removed together with the porogen. Therefore, washing for removing the treatment agent need not be additionally carried out. According to 3) described above, the treatment step with the treatment agent need not be carried out as a separate step from the porosification step. Therefore, 1) and 3) are more advantageous than 2) in terms of production efficiency.

In the present embodiment, as described above, a step of obtaining an epoxy resin sheet is carried out before the porosification step and the treatment step, irrespective of which of 1) to 3) described above is employed. The step of obtaining an epoxy resin sheet includes: preparing an epoxy resin composition containing an epoxy resin, a curing agent, and a porogen; and forming a cured product of the epoxy resin composition into a sheet shape or curing a sheet-shaped formed body of the epoxy resin composition, so as to obtain an epoxy resin sheet.

The separator 4 may consist only of the porous epoxy resin membrane, or may be composed of a stack of the porous epoxy resin membrane and another porous material. Examples of the other porous material include porous polyolefin membranes such as porous polyethylene membranes and porous polypropylene membranes, porous cellulose membranes, and porous fluorine resin membranes. The other porous material may be provided on only one surface or both surfaces of the porous epoxy resin membrane.

Also, the separator 4 may be composed of a stack of the porous epoxy resin membrane and a reinforcing member. Examples of the reinforcing member include woven fabrics and non-woven fabrics. The reinforcing member may be provided on only one surface or both surfaces of the porous epoxy resin membrane.

Examples

Hereinafter, the present invention will be described in more detail with reference to examples. However, the present invention is not limited to these examples. In the following description, RO water means pure water obtained by treatment using a reverse osmosis membrane, DMF means N,N-dimethylformamide, and v/v means a volume ratio. The methods for evaluating characteristics were as described below.

[Porosity]

An epoxy resin and an amine (curing agent) used in each of the examples and comparative examples was used to fabricate a non-porous body of the epoxy resin. The porosity of each porous epoxy resin membrane was calculated from the specific gravity of the non-porous body and the specific gravity of the porous epoxy resin membrane.

[Air permeability]

The air permeability (Gurley value) of each porous epoxy resin membrane was measured according to the method specified in Japanese Industrial Standards (JIS) P 8117.

[Evaluation of characteristics of lithium-ion secondary battery]

Lithium-ion secondary batteries including separators of the examples and comparative examples were each fabricated by the method described below.

Mixed were 89 parts by weight of lithium cobalt oxide (Cellseed C-10 manufactured by Nippon Chemical Industrial Co., Ltd.), 10 parts by weight of acetylene black (Denka Black manufactured by Denki Kagaku Kogyo K.K.), and 5 parts by weight of PVDF (KF Polymer L#1120 manufactured by Kureha Chemical Industries Co., Ltd.). N-methyl-2-pyrrolidone was then added so that the solid content concentration was 15% by weight, and thus a slurry for a cathode was obtained. The slurry was applied in a thickness of 200 $\mu$m onto an aluminum foil (current collector) having a thickness of 20 $\mu$m. The coating was vacuum-dried at 80°C for 1 hour and at 120°C for 2 hours, and was then compressed by roll pressing. A cathode having a cathode active material layer with a thickness of 100 $\mu$m was thus obtained.

Mixed were 80 parts by weight of mesocarbon microbeads (MCMB6-28 manufactured by Osaka Gas Chemicals Co., Ltd.), 10 parts by weight of acetylene black (Denka Black manufactured by Denki Kagaku Kogyo K.K.), and 10 parts by weight of PVDF (KF Polymer L#1120 manufactured by Kureha Chemical Industries Co., Ltd.). N-methyl-2-pyrrolidone was then added so that the solid content concentration was 15% by weight, and thus a slurry for an anode was obtained. The slurry was applied in a thickness of 200 $\mu$m onto a copper foil (current collector) having a thickness of 20 $\mu$m. The coating was vacuum-dried at 80°C for 1 hour and at 120°C for 2 hours, and was then compressed by roll pressing. An anode having an anode active material layer with a thickness of 100 $\mu$m was thus obtained.

Next, an electrode group was assembled from the cathode, the anode, and the separator. Specifically, the electrode group was obtained by stacking the cathode, the porous epoxy resin membrane (separator), and the anode. The electrode group was placed in an aluminum-laminated package, and then an electrolyte solution was injected into the package. The electrolyte solution used was a solution in which $LiPF_6$ was dissolved at a concentration of 1.4 mol/liter in a solvent containing ethylene carbonate and diethyl carbonate at a volume ratio of 1:2 and which contained 1% by weight of vinylene carbonate. The package was finally sealed to obtain a lithium-ion secondary battery.

The initial charge/discharge capacity, the discharge efficiency, and the capacity maintenance ratio after continuous charge, were measured for each of the lithium-ion secondary batteries obtained as above in accordance with the methods described below. For each test, a new battery not subjected to any other test was used.

[Initial charge/discharge capacity]

Charge and discharge of each battery were performed repeatedly three times at a temperature of 25°C with a current of 0.2 CmA. The charge was constant current charge until the voltage reached 4.2 V, and was then switched to constant voltage charge. The discharge was constant current discharge, and the cutoff voltage was set at 2.75 V. The discharge capacity at the first discharge was measured as the initial capacity.

[3rd/1st discharge efficiency]

Charge and discharge of each battery were performed repeatedly three times at a temperature of 25°C with a current of 0.2 CmA. The charge was constant current charge until the voltage reached 4.2 V, and was then switched to constant voltage charge. The discharge was constant current discharge, and the cutoff voltage was set at 2.75 V For each battery, the percentage (%) of the discharge amount at the third discharge to the discharge amount at the first discharge was calculated.

[Capacity maintenance ratio after continuous charge (1C capacity maintenance ratio)]

Each battery was placed in a constant-temperature chamber having a temperature of 60°C, and was charged at a constant current of 0.2 CmA and a constant voltage of 4.25 V for 40 days. The battery was discharged at a constant current of 0.2 CmA with the cutoff voltage set at 2.75 V

The battery having been subjected to the above test was charged once at a temperature of 25°C at a constant current of 0.2 CmA and a constant voltage of 4.2 V The battery was then discharged at a constant current of 0.2 CmA with the cutoff voltage set at 2.75 V Thereafter, the battery was charged at a constant current of 0.2 CmA and a constant voltage of 4.2 V, and was then discharged at a constant current of 1 CmA with the cutoff voltage set at 2.75. The discharge capacity at the 1 CmA discharge was divided by the initial capacity (the initial capacity obtained in the test for determining the initial charge/discharge capacity), and the resultant value was used as the capacity maintenance ratio.

(Comparative Example 1)

In a 3L hollow-cylindrical poly container, 1146.5 g of a bisphenol A-type epoxy resin (jER 828 manufactured by Mitsubishi Chemical Corporation and having an epoxy equivalent of 184 g/eq. to 194 g/eq.) and 94.2 g of diaminohexane (first grade, manufactured by Wako Pure Chemical Industries, Ltd.) were dissolved in 1680 g of polypropylene glycol (SANNIX PP-400 manufactured by Sanyo Chemical Industries, Ltd.) to prepare an epoxy resin/amine/polypropylene glycol solution. Thereafter, 380 g of the diaminohexane was added to the poly container. Using a planetary centrifugal mixer, vacuum defoaming was performed at about 0.7 kPa while stirring was simultaneously performed at a revolution speed of 800 rpm for 10 minutes under the condition that the rotation/revolution ratio was 3/4. This stirring and defoaming process was repeated twice. The temperature of the solution was increased by the stirring, and was 70.0°C immediately after the stirring.

After subsequent natural cooling for several days, the resultant epoxy resin block was taken out from the poly container, and was continuously sliced at a thickness of 30 $\mu$m using a cutting lathe. Thus, an epoxy resin sheet was obtained. The epoxy resin sheet was washed with a mixed liquid of RO water and DMF (v/v = 1/1) under ultrasonic wave for 10 minutes. Thereafter, the epoxy resin sheet was washed with only RO water under ultrasonic wave for 10 minutes, and was immersed in RO water for 12 hours to remove polypropylene glycol. Thereafter, drying at 80°C was performed for 2 hours to obtain a porous epoxy resin membrane.

(Example 1)

The porous epoxy resin membrane fabricated in Comparative Example 1 was immersed in acetic anhydride (special grade, manufactured by Wako Pure Chemical Industries, Ltd.) at ordinary temperature for 10 minutes. Thereafter, the porous epoxy resin membrane was taken out, immersed in ethanol for 10 minutes, and further immersed in RO water for 10 minutes to remove the remaining acetic anhydride. Subsequently, the porous epoxy resin membrane was dried with an oven of 50°C for 1 hour to obtain an acetic anhydride-treated porous epoxy resin membrane.

(Comparative Example 2)

The porous epoxy resin membrane fabricated in Comparative Example 1 was immersed in a 5mM sulfuric acid solution (whose solvent was a mixed solvent of RO water and DMF mixed at a volume ratio of 50:50) for 10 minutes. Thereafter, the porous epoxy resin membrane was taken out, immersed in ethanol for 10 minutes, and then immersed in RO water for 10 minutes to remove the remaining sulfuric acid. Subsequently, the porous epoxy resin membrane was dried with an oven of 50°C for 1 hour to obtain a sulfuric acid-treated porous epoxy resin membrane.

(Reference Example)

A porous polypropylene membrane, CG 2400 manufactured by Celgard, LLC, was used.

The results of evaluation of Example 1 and Comparative Examples 1 and 2 are collectively shown in Table 1 and Table 2 together with the results of evaluation of Reference Example.

[Table 1]

|  | Acid treatment | Initial charge/discharge capacity [mAh] | 3rd/1st discharge efficiency [%] |
|---|---|---|---|
| Comparative Example 1 | - | 16.5 | 94.4 |
| Example 1 | Acetic anyhydride | 16.6 | 98.8 |
| Comparative Example 2 | Sulfuric acid | 16.5 | 97.7 |
| Reference Example | (Porous polypropylene membrane) | 16.7 | 98.8 |

[Table 2]

|  | Membrane thickness [$\mu$m] | Porosity [%] | Gurley value [sec/dL/20 $\mu$m] |
|---|---|---|---|
| Comparative Example 1 | 26.1 | 40 | 467 |
| Example 1 | 26.4 | 39 | 490 |
| Reference Example | 26.9 | 39 | 448 |

Gurley value: Expressed by a value resulting from (measured value x (20/d)) in order to eliminate influence of the membrane thickness (d [$\mu$m]).

As shown in Table 1, the charge/discharge characteristics of the lithium-ion secondary battery using the porous epoxy resin membrane of Example 1 were improved compared to the characteristics provided by the porous epoxy resin membrane of Comparative Example 1 based on which the porous epoxy resin membrane of Example 1 was fabricated. It can be understood that a porous epoxy resin membrane can be improved by treatment of active functional groups so as to be suitable as a separator. The 3rd/1st discharge efficiency of the lithium-ion secondary battery was improved also by the treatment using sulfuric acid (Comparative Example 2). However, the sulfuric acid treatment provided only a limited improvement, and was less effective than the treatment with acetic anhydride (Example 1).

(Comparative Example 3)

In a 10L hollow-cylindrical poly container, 3126.9 g of a bisphenol A-type epoxy resin (jER 828 manufactured by Mitsubishi Chemical Corporation) and 94.6 g of 1,6-diaminohexane (special grade, manufactured by Tokyo Chemical Industry Co., Ltd.) were dissolved in 5400 g of polypropylene glycol (SANNIX PP-400 manufactured by Sanyo Chemical Industries, Ltd.) to prepare an epoxy resin/amine/polypropylene glycol solution. Thereafter, 380 g of the diaminohexane was added to the poly container. Using a planetary centrifugal mixer, vacuum defoaming was performed at about 0.7 kPa while stirring was simultaneously performed at a revolution speed of 300 rpm for 10 minutes under the condition that the rotation/revolution ratio was 3/4. This stirring and defoaming process was repeated nine times. The temperature of the solution was increased by the stirring, and was 48.2°C immediately after the stirring.

Thereafter, the resultant epoxy resin block was taken out from the poly container, and was continuously sliced at a thickness of 30 $\mu$m using a cutting lathe. Thus, an epoxy resin sheet was obtained. The epoxy resin sheet was immersed in a mixed liquid of RO water and DMF (v/v = 1/1) for 30 minutes, and then 10-minute immersion only in RO water was repeated twice to remove polypropylene glycol. Thereafter, drying at 80°C was performed for 2 hours to obtain a porous epoxy resin membrane.

(Example 2)

A continuously-sliced epoxy resin sheet with a thickness of 30 $\mu$m was obtained in the same manner as in Comparative Example 3. The epoxy resin sheet was treated with acetic anhydride before the porogen (polypropylene glycol) was removed by RO water. This treatment was carried out by keeping the epoxy resin sheet in contact with acetic anhydride for 1 minute. Subsequently, the epoxy resin sheet was immersed in RO water of 60°C for 5 minutes to remove acetic anhydride and polypropylene glycol. Thereafter, drying at 100°C was performed for 1 hour to obtain a porous epoxy resin membrane.

(Example 3)

A continuously-sliced epoxy resin sheet with a thickness of 30 $\mu$m was obtained in the same manner as in Comparative Example 3. The epoxy resin sheet was treated with acetic anhydride before the porogen (polypropylene glycol) was removed by RO water. This treatment was carried out by keeping the epoxy resin sheet in contact with acetic anhydride for 10 minutes. Subsequently, the epoxy resin sheet was immersed in RO water of 60°C for 5 minutes to remove acetic anhydride and polypropylene glycol. Thereafter, drying at 100°C was performed for 1 hour to obtain a porous epoxy resin membrane.

The results of evaluation of Examples 2 and 3 and Comparative Example 3 are collectively shown in Table 3 and Table 4 together with the results of evaluation of Reference Example. As in Table 2, each of the Gurley values in Table 4 is a value resulting from (measured value x (20/d)).

[Table 3]

| | Acid treatment | | Initial charge/discharge capacity [mAh] | 3rd/1st discharge efficiency [%] | 1C capacity maintenance ratio [%] |
|---|---|---|---|---|---|
| | Acid | Treatment time | | | |
| Comparative Example 3 | - | - | 17.0 | 99.1 | 2.7 |
| Example 2 | Acetic anyhydride | 1 minute | 17.1 | 99.2 | 32.2 |
| Example 3 | Acetic anyhydride | 10 minutes | 17.1 | 99.2 | 46.5 |
| Reference Example | (Porous polypropylene membrane) | | 16.7 | 98.8 | 3.2 |

[Table 4]

| | Membrane thickness [$\mu$m] | Porosity [%] | Gurley value [sec/dL/20 $\mu$m] |
|---|---|---|---|
| Comparative Example 3 | 29.6 | 55.0 | 21.4 |
| Example 2 | 29.0 | 53.3 | 20.8 |
| Example 3 | 29.8 | 53.3 | 20.8 |
| Reference Example | 26.9 | 39.0 | 448 |

As shown in Table 3, the charge/discharge characteristics of the lithium-ion secondary batteries using the porous epoxy resin membranes of Examples 2 and 3 were improved compared to the characteristics provided by the porous epoxy resin membrane of Comparative Example based on which the porous epoxy resin membranes of Examples 2 and 3 were fabricated.

It has been confirmed by other experiments that, as can be deduced from the above results, the charge/discharge characteristics of lithium-ion secondary batteries are improved also in the case of using a treatment agent other than acetic anhydride that is selected from a carboxylic acid, a carboxylic acid salt, a carboxylic acid anhydride, and a carboxylic acid halide. In one example, the 3rd/1st discharge efficiency of a lithium-ion secondary battery was 98.7% when an untreated membrane was used as the separator, but the 3rd/1st discharge efficiency was increased to 99.2% when a separator treated with isophthaloyl chloride was used.

INDUSTRIAL APPLICABILITY

The separator provided by the present invention can be suitably used for nonaqueous electrolyte electricity storage devices such as lithium-ion secondary batteries, and can be suitably used in particular for high-capacity secondary batteries required for vehicles, motorcycles, ships, construction machines, industrial machines, and residential electricity storage systems.

**Claims**

1. A method for producing a separator for nonaqueous electrolyte electricity storage devices that includes a porous epoxy resin membrane, the method comprising:

    a porosification step of removing a porogen from an epoxy resin sheet containing a cured epoxy resin composition and the porogen by means of a solvent, and thereby making the epoxy resin sheet porous so as to obtain a porous epoxy resin membrane; and
    a treatment step of bringing at least one compound selected from a carboxylic acid, a carboxylic acid salt, a carboxylic acid anhydride, and a carboxylic acid halide, into contact with the porous epoxy resin membrane or the epoxy resin sheet, and thereby reacting hydroxyl groups contained in the porous epoxy resin membrane or hydroxyl groups contained in the cured epoxy resin composition with the compound so as to produce carboxylic acid ester bonds.

2. The method for producing a separator for nonaqueous electrolyte electricity storage devices according to claim 1, wherein the hydroxyl groups are reacted with the compound by immersing the porous epoxy resin membrane or the epoxy resin sheet in the compound in liquid form or in a solution containing the compound.

3. The method for producing a separator for nonaqueous electrolyte electricity storage devices according to claim 1, wherein the hydroxyl groups are reacted with the compound by applying or spraying the compound in liquid form, or a solution containing the compound, onto the porous epoxy resin membrane or the epoxy resin sheet.

4. The method for producing a separator for nonaqueous electrolyte electricity storage devices according to claim 1, wherein the treatment step is carried out before the porosification step, and the hydroxyl groups contained in the cured epoxy resin composition are reacted with the compound to produce carboxylic acid ester bonds.

5. The method for producing a separator for nonaqueous electrolyte electricity storage devices according to claim 1, wherein the treatment step is carried out after the porosification step, and the hydroxyl groups contained in the porous epoxy resin membrane are reacted with the compound to produce carboxylic acid ester bonds.

6. The method for producing a separator for nonaqueous electrolyte electricity storage devices according to claim 1, wherein a combined step of the treatment step and the porosification step is carried out by using a treatment liquid containing the compound and the solvent to remove the porogen from the epoxy resin sheet and simultaneously to produce the carboxylic acid ester bonds.

7. The method for producing a separator for nonaqueous electrolyte electricity storage devices according to claim 1, further comprising a step of obtaining the epoxy resin sheet, wherein
   the step of obtaining the epoxy resin sheet comprises:

    preparing an epoxy resin composition containing an epoxy resin, a curing agent, and a porogen; and
    forming a cured product of the epoxy resin composition into a sheet shape or curing a sheet-shaped formed body of the epoxy resin composition.

8. A method for producing a nonaqueous electrolyte electricity storage device including: an electrode group composed of a layered structure of a cathode, a separator including a porous epoxy resin membrane, and an anode; and an electrolyte having ion conductivity, the method comprising the steps of:

    preparing the cathode, the separator, and the anode; and
    layering the cathode, the separator, and the anode in this order to fabricate the electrode group, wherein
    the step of preparing the separator comprises:

        a porosification step of removing a porogen from an epoxy resin sheet containing a cured epoxy resin composition and the porogen by means of a solvent, and thereby making the epoxy resin sheet porous so as to obtain a porous epoxy resin membrane; and
        a treatment step of bringing at least one compound selected from a carboxylic acid, a carboxylic acid salt, a carboxylic acid anhydride, and a carboxylic acid halide, into contact with the porous epoxy resin membrane or the epoxy resin sheet, and thereby reacting hydroxyl groups contained in the porous epoxy resin membrane or hydroxyl groups contained in the cured epoxy resin composition with the compound so as to produce carboxylic acid ester bonds.

FIG. 1

FIG. 2A

Before acetic anhydride treatment
After acetic anhydride treatment

Arbitrary scale

Wavenumber (cm$^{-1}$)

FIG. 2B

FIG. 2C

FIG. 3

**INTERNATIONAL SEARCH REPORT**

| International application No. |
| --- |
| PCT/JP2012/003831 |

A. CLASSIFICATION OF SUBJECT MATTER
*H01M2/16*(2006.01)i, *C08J9/26*(2006.01)i, *C08J9/40*(2006.01)i, *H01M10/058*
(2010.01)i

According to International Patent Classification (IPC) or to both national classification and IPC

B. FIELDS SEARCHED

Minimum documentation searched (classification system followed by classification symbols)
H01M2/16, C08J9/26, C08J9/40, H01M10/058

Documentation searched other than minimum documentation to the extent that such documents are included in the fields searched
Jitsuyo Shinan Koho        1922-1996    Jitsuyo Shinan Toroku Koho    1996-2012
Kokai Jitsuyo Shinan Koho  1971-2012    Toroku Jitsuyo Shinan Koho    1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2006-351365 A  (Tomoegawa Paper Co., Ltd.), 28 December 2006 (28.12.2006), paragraphs [0008], [0019] to [0023] (Family: none) | 1-8 |
| A | JP 2009-076350 A  (Kuraray Co., Ltd.), 09 April 2009 (09.04.2009), paragraph [0041] (Family: none) | 1-8 |
| A | JP 2006-179280 A  (Nitto Denko Corp.), 06 July 2006 (06.07.2006), paragraphs [0007] to [0035], [0055] to [0060] (Family: none) | 1-8 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 31 July, 2012 (31.07.12) | 07 August, 2012 (07.08.12) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2012/003831

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2009-193761 A  (Nitto Denko Corp.),<br>27 August 2009 (27.08.2009),<br>entire text<br>(Family: none) | 1-8 |

Form PCT/ISA/210 (continuation of second sheet) (July 2009)

**EP 2 720 295 A1**

**Patent documents cited in the description**

- JP 2001192487 A
- JP 2000030683 A